# EUROPÄISCHE PATENTSCHRIFT

(11) **EP 2 731 700 B1**
(45) Veröffentlichungstag und Bekanntmachung des Hinweises auf die Patenterteilung: **09.09.2015**
(21) Anmeldenummer: 12735258.1
(22) Anmeldetag: 05.07.2012
(51) Int. Cl.: B01D 53/86, B21B 45/06, F27D 17/00, C23G 3/02, C23G 1/08, C21D 9/56

(54) **VERFAHREN ZUR STAHLBEHANDLUNG SOWIE STAHLBEHANDLUNGSANLAGE**
PROCESS FOR STEEL TREATMENT AND STEEL TREATMENT PLANT
PROCÉDÉ DE TRAITEMENT D'ACIER AINSI QU'INSTALLATION DE TRAITEMENT D'ACIER

(30) Priorität: 12.07.2011 DE 102011079022; 22.11.2011 DE 102011086807
(43) Veröffentlichungstag der Anmeldung: 21.05.2014
(73) Patentinhaber: SMS group GmbH, 40237 Düsseldorf (DE)
(72) Erfinder: WIESNER, Klaus-Dieter, 42781 Haan (DE)
(74) Vertreter: Klüppel, Walter
(86) Internationale Anmeldenummer: PCT/EP2012/063070
(87) Internationale Veröffentlichungsnummer: WO 2013/007579

(56) Entgegenhaltungen:
- WO-A1-2010/099929
- DE-A1-102007 007 324

## Beschreibung

### Technisches Gebiet

Die vorliegende Erfindung betrifft ein Verfahren zur Stahlbehandlung sowie eine Stahlbehandlungsanlage.

### Stand der Technik

Es ist bekannt, Metalloberflächen mittels Beizens zu reinigen. Beispielsweise ist die Oberflächenreinigung mittels Beizens ein wichtiger Prozessschritt bei der Herstellung von gewalzten Stahlbändern, um beispielsweise Zunder von den jeweiligen Oberflächen zu entfernen. Das Beizen wird dabei typischerweise durch ein Anätzen mittels einer Säure durchgeführt. In einem möglichen Beizverfahren wird hierzu Schwefelsäure oder Fluorwasserstoffsäure, welche auch als Flusssäure (HF) bekannt ist, verwendet.

Typischerweise sind Beizlinien bei der Stahlherstellung kombiniert mit Glühlinien, wobei das entsprechende Edelstahlwarmband oder -kaltband üblicherweise zuerst den Glühofen durchläuft, und dann gebeizt wird.

In der Stahlbeize entsteht üblicherweise beim Durchleiten des heißen Metalls des Stahlbandes Prozessabluft, welche NOx und Flusssäurereste aufweist. Diese Abgase müssen, bevor sie abgeleitet werden können, von den entsprechenden Flusssäureresten bzw. Stickoxidresten weitgehend gereinigt werden, um die entsprechenden Emissionsgrenzwerte zu erreichen.

Entsprechend ist es bekannt, die von der Stahlbeize stammende Prozessabluft zunächst zu waschen, um die Säurereste auszutragen, und dann mittels eines Katalysators die Stickoxidkonzentration zu reduzieren.

Zur Entfernung der Stickoxide aus den Prozessabgasen werden typischerweise Katalysatoren verwendet, welche Betriebstemperaturen zwischen 200°C und 300°C aufweisen. Hier werden beispielsweise SCR (Selected Catalytic Reduction)-Technologien verwendet, mittels welcher die Stickoxide in Stickstoff und Wasser umgewandelt werden. Diese Katalysatoren sind bekannterweise auch zur Behandlung von Stickoxid-haltigen Abgasen aus der chemischen Metallbehandlung, besonders auch bei Beizprozessen, bekannt.

Aus der DE 10 2007 324 A1 ist bekannt, zur Aufheizung des Abgases bzw. der Prozessabluft aus der Beizlinie auf die Temperatur, welche für die katalytische Aufspaltung im SCR-Katalysator notwendig ist, den Abgasen der Beizsektion vor der selektiven katalytischen Reduktion Wärme aus den Abgasen des vorgeschalteten Glühofens zuzuführen. Entsprechend kann hier bereits Energie für die Erwärmung der Abgase aus der Beizlinie eingespart werden.

In der DE 10 06 990 A1 ist ein Verfahren zur Rückgewinnung von Säuren aus metallhaltigen Lösungen der Säuren beschrieben.

### Darstellung der Erfindung

Der Energieeinsatz in den kombinierten Glüh-Beizlinien ist immer noch sehr hoch. Entsprechend ist es eine Aufgabe der vorliegenden Erfindung, den Energieeinsatz beim Betrieb einer Beizanlage weiter zu reduzieren.

Diese Aufgabe wird durch ein Verfahren zur Stahlbehandlung mit den Merkmalen des Anspruchs 1 gelöst. Vorteilhafte Ausgestaltungen ergeben sich aus den Unteransprüchen.

Im entsprechenden Verfahren zur Stahlbehandlung durch Glühen in einem Glühofen und Beizen in einer Stahlbeize, wird die Prozessabluft aus der Stahlbeize auf Katalysatorbetriebstemperatur aufgeheizt und einem Katalysator zur Reduzierung der Stickoxidkonzentration zugeführt. Erfindungsgemäß wird die durch den Katalysator geführte Prozessabluft mindestens einem Aufheizbrenner des Glühofens als Verbrennungsluft zugeführt.

Dadurch, dass die durch den Katalysator gereinigte Prozessabluft der Brennerluft des Glühofens wieder zugeschlagen wird, kann die Wärmeenergie, welche der Prozessabluft der Beizanlage zugeführt wurde, um die katalytische Aufspaltung bzw. katalytische Reinigung der Prozessabluft im Katalysator zu ermöglichen, wiederum als Heizenergie für den Glühofen verwendet werden. Mit anderen Worten kann hier die Energiemenge, welche zum Betrieb des Glühofens verwendet wird, um die über die gereinigte Prozessabluft wieder eingetragene Wärmemenge reduziert werden. In den herkömmlichen Verfahren wird die Prozessabluft nach der Reinigung durch den Katalysator an die Umwelt abgegeben. Der sich hieraus ergebende Energieverlust kann mittels des angegebenen Verfahrens reduziert werden, da die Abwärme aus dem Katalysator ebenfalls zum Heizen des Glühofens verwendet werden kann.

In einer vorteilhaften Weiterbildung des Verfahrens wird die Prozessabluft der Stahlbeize vor dem Katalysator mittels eines Zusatzbrenners aufgeheizt.

Durch das zusätzliche Aufheizen der Prozessabluft vor dem Katalysator mittels eines Zusatzbrenners kann erreicht werden, dass auch bei abgeschaltetem oder nicht bei voller Leistung betriebenem Glühofen und entsprechend die über den Wärmetauscher in die Prozessabluft eingetragene Wärmemenge nicht ausreicht, um die Prozessabluft auf Katalysatorbetriebstemperatur zu erwärmen, dennoch ein zuverlässiger Betrieb des Katalysators erreicht werden kann und der Katalysator die geforderte Aufspaltung der Stickoxide in Stickstoff und Wasser durchführen kann. Hierdurch wird eine größere Unabhängigkeit der beiden Prozessschritte voneinander erreicht, wobei die durch den Zusatzbrenner hinzugeführte Energie nachfolgend im Glühofen wieder verwendet werden kann.

Die Aufheizung des Prozessabgases kann bevorzugt mittels eines Wärmetauschers durchgeführt werden, welcher die Abwärme der Ofenluft aus dem Glühofen zur Erwärmung des Prozessabgases verwendet.

Um die Prozessabluft von Säureresten zu reinigen, wird die Prozessabluft der Stahlbeize vor dem Eintritt in den Katalysator bevorzugt in einem Säurewäscher gewaschen.

In einer bevorzugten Weiterbildung des Verfahrens wird zumindest ein Teil der Prozessabluft nach Durchlaufen des Katalysators der Prozessabluft vor dem Katalysator zugeschlagen, bevorzugt über eine Zuschlagsleitung. Auf diese Weise kann zum einen eine Verdünnung der HF-Konzentration erreicht werden und zum anderen kann zusätzliche Wärmeenergie zugeführt werden. Hierdurch wird zum einen eine Kondensation der Flusssäure verhindert und zum anderen kann eine Erwärmung des Prozessabgas-Ofenabgasgemisches auf eine Temperatur erreicht werden kann, welche für den Katalysator notwendig ist.

Entsprechend kann die nach dem Katalysator erhitzte Prozessabluft auch zu einem Teil der Prozessabluft vor dem Katalysator zugeschlagen werden, um hier ebenfalls eine Erwärmung der Prozessabluft, welche aus dem HF-Wäscher kommt, zu erreichen und gleichzeitig eine Verdünnung zu ermöglichen, welche einer Kondensation der Flusssäure entgegenwirkt.

Das Ofenabgas des Glühofens kann bevorzugt dazu verwendet werden, beispielsweise über einen Wärmetauscher, die frische Ofenzuluft, welche den Aufheizbrennern des Glühofens zugeführt wird, zu erwärmen. Auch auf diese Weise wird ein verbesserter Energiefluss innerhalb der Anlage erreicht.

Das Ofenabgas aus dem Glühofen kann weiterhin dazu verwendet werden, Prozessdampf zu erzeugen.

Die oben genannte Aufgabe wird auch durch eine Stahlbehandlungsanlage mit den Merkmalen des Anspruchs 8 gelöst. Vorteilhafte Weiterbildungen ergeben sich aus den Unteransprüchen.

Entsprechend hat die Stahlbehandlungsanlage einen Glühofen zum Glühen von Stahl, eine Stahlbeize zum Beizen des Stahls und mit einem Katalysator zur Reduzierung der Stickoxidkonzentration der aus der Stahlbeize stammenden Prozessabluft. Eine Aufheizvorrichtung zum Aufheizen der Prozessabluft vor dem Katalysator ist vorgesehen, um die Prozessabluft auf Katalysatorbetriebstemperatur zu erwärmen. Erfindungsgemäß ist eine Zuführvorrichtung zum Zuführen der durch den Katalysator geführten Prozessabluft zu mindestens einem Aufheizbrenner des Glühofens vorgesehen.

Auf die genannte Weise kann die Prozessabluft, nachdem sie den Katalysator durchlaufen hat, zur Erwärmung des Glühofens beitragen. Der Prozessabluft wurde vor dem Katalysator Wärme zugeführt, um sie auf Katalysatorbetriebstemperatur zu erwärmen. Diese Wärme kann geht mittels der vorgeschlagenen Anlage nicht mehr verloren, sondern kann zur Erwärmung des Glühofens eingesetzt werden. Auf diese Weise kann die Gesamtenergiebilanz der Stahlbehandlungsanlage verbessert werden.

### Kurze Beschreibung der Figur

Bevorzugte weitere Ausführungsformen und Aspekte der vorliegenden Erfindung werden durch die nachfolgende Beschreibung der Figur näher erläutert.
Dabei zeigt:

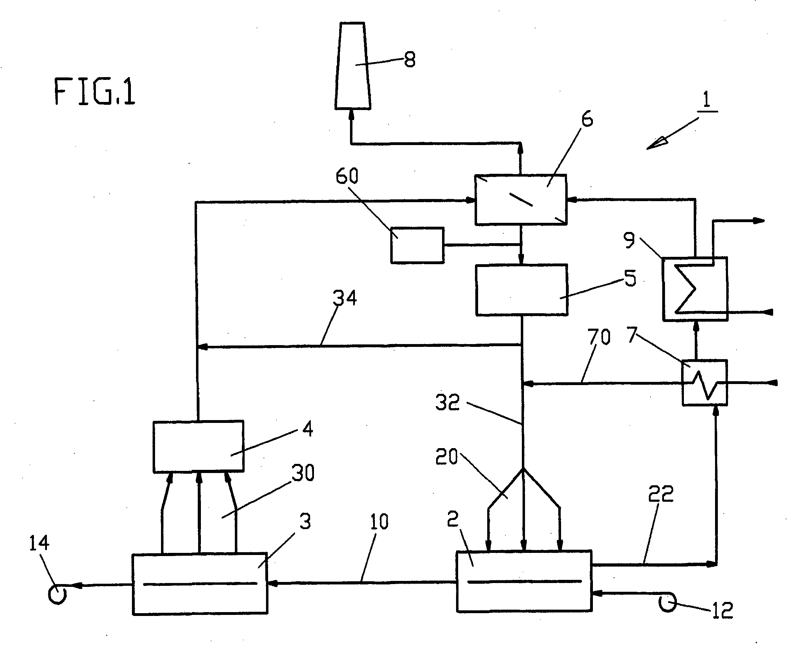

- Figur 1: eine Anlage zur Stahlbehandlung gemäß einem bevorzugten Ausführungsbeispiel.

### Detaillierte Beschreibung der bevorzugten Ausführungsbeispiele

Im Folgenden werden bevorzugte Ausführungsbeispiele anhand der Figur beschrieben.

Figur 1 zeigt eine Stahlbehandlungsanlage 1 mit einem Glühofen 2 zum Glühen von Stahl und einer Stahlbeize 3. Die Stahlbehandlungsanlage 1 wird beispielsweise dazu verwendet, um Stahl zu Glühen und zu Beizen, um beispielsweise bei Kalt- oder Warmbändern eine vorteilhafte Oberflächenstruktur des Produktes zu erreichen.

Hierzu wird das Stahlband 10, welches beispielsweise als Coil 12 angeliefert wird, zunächst abgewickelt und dann in einem Glühofen 2 geglüht. Das Stahlband 10 wird dann in eine Stahlbeize 3 geführt, in welcher es einer Säurebehandlung unterzogen wird, um beispielsweise Zunder von der Oberfläche zu entfernen und eine hochwertige Oberflächenstruktur zu erhalten. Als Säure für die Säurebehandlung in der Stahlbeize 3 kann hier beispielsweise Flusssäure, also Fluorwasserstoff (HF), verwendet werden. Nachdem das Stahlband 10 die Stahlbeize 3 durchlaufen hat, wird es wiederum zu einem Coil 14 aufgewickelt.

Der Glühofen 2 wird typischerweise mit Aufheizbrennern 20 auf die entsprechende Glühtemperatur aufgeheizt. Die Aufheizbrenner sind dabei bevorzugt Brenner, welche einen niedrigen Stickoxidausstoß aufweisen. Solche Brenner werden auch als Low-NOx-Brenner bezeichnet. Das von den Aufheizbrennern 20 erzeugte Ofenabgas wird über eine Abgasabführung 22 aus dem Glühofen 2 ausgetragen. Das Ofenabgas weist noch eine hohe Temperatur auf, beispielsweise im Bereich von 300-600°C.

In der Stahlbeize entsteht unter anderem durch das Einbringen des noch heißen Stahlbandes 10 in die flüssige Säure ebenfalls Prozessabluft, welche über entsprechende Abluftabzüge 30 aus der Stahlbeize 3 ausgetragen wird. Die Prozessabluft umfasst typischerweise Stickoxide (NOx) sowie Säurereste, beispielsweise Reste von Flusssäure (HF). Diese Flusssäurereste werden in einem Säurewäscher 4 weitestgehend aus der Prozessabluft 30 entfernt. Die Prozessabluft weist nach dem Säurewäscher 4 noch Temperaturen von ungefähr 40°C auf.

Um die Stickoxide aus der Prozessabluft der Stahlbeize 3 zu entfernen bzw. deren Konzentration zu verringern ist ein Katalysator 5 vorgesehen, durch welchen hindurch die Prozessabluft geführt wird. Bei dem Katalysator 5 kann es sich beispielsweise um einen SCR-Katalysator (Selective Catalytic Reduction Katalysator) handeln. Der Katalysator benötigt typischerweise höhere Temperaturen, um die Aufspaltung der Stickoxide vornehmen zu können, als die Temperatur, welche das Prozessgas nach dem Säurewäscher 4 aufweist. Entsprechend muss das Prozessgas von ungefähr 40°C auf die vom Katalysator benötigte Temperatur, welche im Bereich von 140°C bis 400°C liegt, erwärmt werden. Diese Erwärmung kann entweder über einen Wärmetauscher 6 stattfinden, in welchem die Prozessabluft aus der Stahlbeize 3 nach dem Säurewäscher 4 aufgeheizt wird. Der Wärmetauscher 6 kann dabei bevorzugt die Wärmeenergie aus dem Ofenabgas, welches über die Abgasführung 22 dem Wärmetauscher 6 zugeführt wird, zur Erwärmung verwenden.

In einer Variante, oder zusätzlich, sind Zusatzbrenner 60 vorgesehen, welche ebenfalls zur Erwärmung des Prozessabgases aus der Stahlbeize 3 nach dem Säurewäscher 4 dienen können. Die entsprechend auf Katalysatorarbeitstemperatur erwärmte Prozessabluft aus der Stahlbeize 3 durchläuft dann den Katalysator 5 und entsprechend werden die Stickoxide in Stickstoff und Wasser aufgespalten.

Nach dem Katalysator wird die nun von Säureresten und von Stickoxiden gereinigte Prozessabluft aus der Stahlbeize 3, welche jedoch immer noch eine hohe Wärmemenge in sich trägt, den Aufheizbrennern 20 des Glühofens 2 als Verbrennungsluft zugeschlagen. Entsprechend ist eine Zuschlagsleitung 32 vorgesehen, mittels welcher die Prozessabluft nach dem Katalysator 5 den Aufheizbrennern 20 direkt zugeführt werden kann. Auf diese Weise kann die Wärmeenergie, welche in der aus dem Katalysator 5 stammenden Prozessabluft steckt, zum Aufheizen des Glühofens 2 verwendet werden.

Mittels eines Ofenabgas/Luftwärmetauschers 7 kann das Ofenabgas 22 auch zur Erwärmung der Frischluft dienen, welche den Aufheizbrennern 20 zugeführt wird. Die Frischluft wird dabei über eine Frischluftzuleitung 70 den Aufheizbrennern 20 des Glühofens 2 zugeführt, wobei die Frischluft durch den Ofenabgas/Luftwärmetauscher 7 ebenfalls erwärmt wird.

Hieraus ergibt sich, dass den Aufheizbrennern 20 des Glühofens 2 eine deutlich erwärmte Brennerluft zugeführt wird, wobei die zugeführte Brennerluft Temperaturen von bereits 100-500°C aufweisen kann. Entsprechend kann die Energie, welche zur Erhitzung des Glühofens 2 notwendig ist, reduziert werden, da die Wärmemenge, die einerseits aus der Stahlbeize 3 stammt und die andererseits über das Ofenabgas der Frischluft zugeführt wird, ebenfalls zur Erhitzung des Glühofens 2 verwendet wird.

Dieses Vorgehen wird daher möglich, da in der Stahlbeize 3 der Sauerstoffgehalt der Prozessabluft in etwa dem Sauerstoffgehalt der normalen Verbrennungsluft in den Aufheizbrennern 20 entspricht, da in der Stahlbeize keinerlei Verbrennung stattfindet. Entsprechend trägt die Prozessabluft aus der Stahlbeize 3 noch den Luftsauerstoffanteil und kann den Aufheizbrennern 20 entsprechend direkt als Brennerluft zugeführt werden. Die in der Prozessabluft vorhandene Wärmemenge kann entsprechend direkt zur Erwärmung des Glühofens 3 verwendet werden.

Das Ofenabgas wird schließlich über den Kamin 8 an die Umgebung abgegeben. Das Ofenabgas 22 enthält dabei nicht nur das eigentliche Ofenabgas, welches von den Aufheizbrennern 20 abgegeben wurde, sondern auch die Prozessabluft aus der Stahlbeize 3, nachdem sie die Aufheizbrenner 20 durchlaufen hat.

In einer vorteilhaften weiteren Ausbildung wird das Ofenabgas zusätzlich noch zur Erzeugung von Prozessdampf mittels eines Abhitzedampferzeugers 9 verwendet, welcher in die Abgasleitung 22 eingefügt ist. Auf diese Weise kann die von dem Glühofen 2 bzw. den Aufheizbrennern 20 erzeugte Wärmeenergie weitestgehend in der Anlage gehalten werden und entsprechend recycelt werden.

Das Verfahren bzw. die Anlage gemäß der vorliegenden Erfindung ermöglicht es entsprechend, den Primärenergieeinsatz bei der Stahlbehandlung weiter zu reduzieren, indem die jeweiligen Energiemengen, die in den entsprechenden Abgasen stecken, so gut wie möglich wiederverwendet werden.

Insbesondere wird die Stickoxid-haltige und Flusssäure-haltige Prozessabluft der Stahlbeize 3 durch einen Säurewäscher 4 in Form des HF-Wäschers geleitet, um die Flusssäurekonzentration zu verringern. Nach der HF-Wäsche wird vorgewärmte und gereinigte Prozessabluft nach dem Durchlaufen des Katalysators 5 mittels der Zuschlagsleitung 34 zugeführt, um eine Erwärmung der Prozessabluft zu erreichen, diese zu verdünnen und die HF-Kondensation zu vermeiden. Nach dieser Beimischung von gereinigter Prozessabluft mittels der Zuschlagsleitung 34 wird die Prozessabluft auf Betriebstemperatur des Katalysators 5 aufgeheizt, entweder mittels eines Wärmetauschers 6, welcher die Wärmeenergie des Ofenabgases aus dem Glühofen 2 verwendet, oder mittels eines Zusatzbrenners 60.

In dem Katalysator 5 werden die Stickoxide aufgespaltet und entsprechend abgeschieden. Die dann von HF und Stickoxid befreite Prozessabluft wird über die Zuschlagsleitung 32 den Aufheizbrennern 20 als Verbrennungsluft zugegeben. Entsprechend kann die Wärmemenge, welche in der Prozessabluft nach dem Durchlaufen des Katalysators 5 vorhanden ist, den Aufheizprozess der Aufheizbrenner 20 im Glühofen unterstützen.

Das Ofenabgas aus dem Glühofen 2 wird dabei zur Vorwärmung der Verbrennungsluft, welche über eine Zuschlagsleitung 70 den Aufheizbrennern 20 zugeführt wird, mittels eines Ofenabgas/Luftwärmetauschers 7 genutzt. Der weitere Ofenabgasstrom kann auch zur Herstellung von Prozessdampf in einem entsprechenden Dampferzeuger 9 verwendet werden.

Die Wärmemenge im Ofenabgas wird dann weiterhin in einem Wärmetauscher 6 dazu verwendet, wiederum die Prozessabluft aus der Stahlbeize 3 auf die Katalysatorbetriebstemperatur aufzuheizen. Das Ofenabgas wird dann über den Kamin 8 an die Umgebung abgegeben. Die Wärmemenge ist dem Ofenabgas dabei so umfassend wie möglich entzogen worden und in dem System zur Stahlerzeugung bzw. Stahlbehandlung gehalten worden.

### Bezugszeichenliste

- 1: Stahlbehandlungsanlage
- 10: Stahlband
- 12: Coil
- 14: Coil
- 2: Glühofen
- 20: Aufheizbrenner
- 3: Stahlbeize
- 30: Prozessabluft
- 32: Zuschlagsleitung zu Aufheizbrennern
- 34: Zuschlagsleitung zu Prozessabluft
- 4: Säurewäscher
- 5: Katalysator
- 6: Wärmetauscher
- 60: Zusatzbrenner
- 7: Ofenabgas/Frischluftwärmetauscher
- 70: Frischluftzuleitung
- 8: Kamin
- 9: Dampferzeuger

## Patentansprüche

1. Verfahren zur Stahlbehandlung durch Glühen in einem Glühofen (2)und Beizen in einer Stahlbeize (3),
wobei die Prozessabluft aus der Stahlbeize (3) auf Katalysatorbetriebstemperatur aufgeheizt wird und einem Katalysator (5) zur Reduzierung der Stickoxidkonzentration zugeführt wird,
**dadurch gekennzeichnet, dass**
die durch den Katalysator (5) geführte Prozessabluft mindestens einem Aufheizbrenner (20) des Glühofens (2) als Verbrennungsluft zugeführt wird.

2. Verfahren gemäß Anspruch 1, wobei die Prozessabluft der Stahlbeize (3) vor dem Katalysator (5) mittels eines Zusatzbrenners (60) aufgeheizt wird.

3. Verfahren gemäß Anspruch 1 oder 2, wobei die Prozessabluft vor dem Katalysator (5) mittels eines Wärmetauschers (6) durch das Ofenabgas des Glühofens (2) aufgeheizt wird.

4. Verfahren gemäß einem der vorstehenden Ansprüche, wobei die Prozessabluft der Stahlbeize (3) vor dem Eintritt in den Katalysator (5) in einem Säurewäscher (4) gewaschen wird.

5. Verfahren gemäß einem der vorstehenden Ansprüche, wobei zumindest ein Teil der Prozessabluft nach Durchlaufen des Katalysators (5) der Prozessabluft vor dem Katalysator (5) zugeschlagen wird, bevorzugt über eine Zuschlagsleitung (34).

6. Verfahren gemäß einem der vorstehenden Ansprüche, wobei das Ofenabgas aus dem Glühofen (2) zur Erwärmung der Verbrennungsluft für mindestens einen Aufheizbrenner (20) des Glühofens (2) dient, wobei die Erwärmung bevorzugt über einen Wärmetauscher (7) durchgeführt wird.

7. Verfahren gemäß einem der vorstehenden Ansprüche, wobei das Ofenabgas aus dem Glühofen (2) zur Erzeugung von Prozessdampf, bevorzugt mittels eines Abhitzedampferzeugers (9), verwendet wird.

8. Stahlbehandlungsanlage (1) mit einem Glühofen (2) zum Glühen von Stahl, mit einer Stahlbeize (3) zum Beizen des Stahls und mit einem Katalysator (5) zur Reduzierung der Stickoxidkonzentration der aus der Stahlbeize (3) stammenden Prozessabluft, wobei eine Aufheizvorrichtung (6, 60) zum Aufheizen der Prozessabluft vor dem Katalysator (5) vorgesehen ist, um die Prozessabluft auf Katalysatorbetriebstemperatur zu erwärmen,
**gekennzeichnet durch**
eine Zuführvorrichtung (32) zum Zuführen der **durch** den Katalysator (5) geführten Prozessabluft zu mindestens einem Aufheizbrenner (20) des Glühofens (2).

9. Stahlbehandlungsanlage (1) gemäß Anspruch 8, wobei die Aufheizvorrichtung zum Aufheizen der Prozessabluft vor dem Katalysator (5) als Wärmetauscher (6) ausgebildet ist, welcher mit dem Ofenabgas des Glühofens (2) beaufschlagt wird.

10. Stahlbehandlungsanlage (1) gemäß Anspruch 8 oder 9, wobei die Aufheizvorrichtung zum Aufheizen der Prozessabluft vor dem Katalysator (5) durch einen Zusatzbrenner (60) ausgebildet ist.

11. Stahlbehandlungsanlage (1) gemäß einem der Ansprüche 8 bis 10, wobei ein Säurewäsche (4) zum Waschen der Prozessabluft der Stahlbeize (3) vor dem Eintritt in den Katalysator (5) vorgesehen ist.

12. Stahlbehandlungsanlage (1) gemäß einem der Ansprüche 8 bis 11, wobei eine Zuschlagsleitung (34) zum Zuschlagen zumindest eines Teils der im Katalysator (5) behandelten Prozessabluft zu der Prozessabluft vor dem Katalysator (5) vorgesehen ist.

13. Stahlbehandlungsanlage (1) gemäß einem der Ansprüche 8 bis 12, wobei ein Wärmetauscher (7) vorgesehen ist, welcher das Ofenabgas aus dem Glühofen (2) zur Erwärmung der Verbrennungsluft für mindestens einen Aufheizbrenner (20) des Glühofens (2) verwendet.

14. Stahlbehandlungsanlage (1) gemäß einem der Ansprüche 8 bis 13, wobei mindestens ein Abhitzedampferzeuger(9) vorgesehen ist, welcher das Ofenabgas aus dem Glühofen (2) zur Erzeugung von Prozessdampf verwendet.

## Claims

1. Method for steel treatment by annealing in an annealing furnace (2) and pickling in a steel pickling means (3), wherein the process exhaust air from the steel pickling means (3) is heated up to catalyser operating temperature and fed to a catalyser (5) for reducing the concentration of nitrogen oxide,
**characterised in that**
the process exhaust air led through the catalyser (5) is fed to at least one heating-up burner (20) of the annealing furnace (2) as combustion air.

2. Method according to claim 1, wherein the process exhaust air of the steel pickling means (3) is heated up upstream of the catalyser (5) by means of an auxiliary burner (60).

3. Method according to claim 1 or 2, wherein the process exhaust air is heated up upstream of the catalyser (5) by means of a heat exchanger (6) by the furnace waste gas of the annealing furnace (2).

4. Method according to any one of the preceding claims, wherein the process exhaust air of the steel pickling means (3) is washed in an acid washer (4) before entry into the catalyser (5).

5. Method according to any one of the preceding claims wherein at least a part of the process exhaust air after running through the catalyser (5) is added to the process exhaust air upstream of the catalyser (5), preferably by way of a supplementing duct (34).

6. Method according to any one of the preceding claims, wherein the furnace waste gas from the annealing furnace (2) serves for heating the combustion air for at least one heating-up burner (20) of the annealing furnace (2), wherein the heating is preferably carried out by way of a heat exchanger (7).

7. Method according to any one of the preceding claims, wherein the furnace waste gas from the annealing furnace (2) is used for generating process steam, preferably by means of a waste heat steam generator (9).

8. Steel treatment plant (1) with an annealing furnace (2) for annealing steel, steel pickling means (3) for pickling the steel and a catalyser (5) for reducing the concentration of nitrogen oxide in the process exhaust air deriving from the steel pickling means (3), wherein a heating-up device (6, 60) for heating up the process exhaust air upstream of the catalyser (5) is provided in order to heat the process exhaust air to catalyser operating temperature,
**characterised by**
a feed device (32) for feeding the process exhaust air, which is led through the catalyser (5), to at least one heating-up burner (20) of the annealing furnace (2).

9. Steel treatment plant (1) according to claim 8, wherein the heating-up device for heating up the process exhaust air upstream of the catalyser (5) is constructed as a heat exchanger (6), which is acted on by the furnace waste gas of the annealing furnace (2).

10. Steel treatment plant (1) according to claim 8 or 9, wherein the heating-up device for heating up the process exhaust air upstream of the catalyser (5) is formed by an auxiliary burner (60).

11. Steel treatment plant (1) according to any one of claims 8 to 10, wherein an acid washer (4) for washing the process exhaust air of the steel pickling means (3) upstream of the entry into the catalyser (5) is provided.

12. Steel treatment plant (1) according to any one of claims 8 to 11, wherein a supplementing duct (34) for adding at least a part of the process exhaust air, which is treated in the catalyser (5) to the process exhaust air upstream of the catalyser (5) is provided.

13. Steel treatment plant (1) according to any one of claims 8 to 12, wherein a heat exchanger (7) which uses the furnace waste gas from the annealing furnace (2) for heating the combustion air for at least one heating-up burner (20) of the annealing furnace (2) is provided.

14. Steel treatment plant (1) according to any one of claims 8 to 13, wherein at least one waste-heat steam generator (9) which uses the furnace waste gas from the annealing furnace (2) for generating process steam is provided.

## Revendications

1. Procédé pour le traitement de l'acier par recuit dans un four à recuire (2) et par décapage dans un bain de décapage pour l'acier (3), dans lequel l'effluent gazeux du processus émanant du bain de décapage pour l'acier (3) est réchauffé à une température de mise en service d'un catalyseur et est acheminé à un catalyseur (5) pour la réduction de la concentration d'oxyde d'azote, **caractérisé en ce que** l'effluent gazeux du processus guidé à travers le catalyseur (5) est acheminé à au moins un brûleur de réchauffage (20) du four à recuire (2) pour faire office d'air de combustion.

2. Procédé selon la revendication 1, dans lequel l'effluent gazeux du processus émanant du bain de décapage pour l'acier (3) est réchauffé avant le catalyseur (5) au moyen d'un brûleur auxiliaire (60).

3. Procédé selon la revendication 1 ou 2, dans lequel l'effluent gazeux du processus est réchauffé avant le catalyseur (5) au moyen d'un échangeur de chaleur (6) via les gaz d'échappement du four à recuire (2).

4. Procédé selon l'une quelconque des revendications précédentes, dans lequel l'effluent gazeux du processus émanant du bain de décapage pour l'acier (3) est lavé avant son entrée dans le catalyseur (5) dans un laveur à l'acide (4).

5. Procédé selon l'une quelconque des revendications précédentes, dans lequel au moins une partie de l'effluent gazeux du processus, après le passage de ce dernier à travers le catalyseur (5), est ajoutée à l'effluent gazeux du processus avant le catalyseur (5), de préférence via un conduit d'addition (34).

6. Procédé selon l'une quelconque des revendications précédentes, dans lequel les gaz d'échappement émanant du four à recuire (2) servent au réchauffage de l'air de combustion pour au moins un brûleur de réchauffage (20) du four à recuire (2), le réchauffage étant mis en oeuvre de préférence via un échangeur de chaleur (7).

7. Procédé selon l'une quelconque des revendications précédentes, dans lequel les gaz d'échappement émanant du four à recuire (2) sont utilisés pour la génération de vapeur du processus, de préférence au moyen d'un générateur de vapeur de récupération de chaleur (9).

8. Installation de traitement de l'acier (1) comprenant un four à recuire (2) pour le recuit de l'acier, un bain de décapage pour l'acier (3) pour le décapage de l'acier et un catalyseur (5) pour la réduction de la concentration d'oxyde d'azote de l'effluent gazeux du processus émanant du bain de décapage pour l'acier (3), dans laquelle on prévoit un dispositif de réchauffage (6, 60) pour le réchauffage de l'effluent gazeux du processus avant le catalyseur (5), pour réchauffer l'effluent gazeux du processus à une température de mise en service du catalyseur, **caractérisé par** un dispositif d'acheminement (32) pour acheminer l'effluent gazeux du processus guidé à travers le catalyseur (5) à au moins un brûleur de réchauffage (20) du four à recuire (2).

9. Instillation de traitement de l'acier (1) selon la revendication 8, dans laquelle le dispositif de réchauffage pour le réchauffage de l'effluent gazeux du processus avant le catalyseur (5) est réalisé sous la forme d'un échangeur de chaleur (6) qui est sollicité avec les gaz d'échappement du four à recuire (2).

10. Installation de traitement de l'acier (1) selon la revendication 8 ou 9, dans laquelle le dispositif de réchauffage pour le réchauffage de l'effluent gazeux du processus avant le catalyseur (5) est réalisé via un brûleur auxiliaire (60).

11. Installation de traitement de l'acier (1) selon l'une quelconque des revendications 8 à 10, dans laquelle on prévoit un lavage à l'acide (4) pour le lavage de l'effluent gazeux du processus émanant du bain de décapage pour l'acier (3) avant son entrée dans le catalyseur (5).

12. Installation de traitement de l'acier (1) selon l'une quelconque des revendications 8 à 11, dans laquelle on prévoit un conduit d'addition (34) pour ajouter au moins une partie de l'effluent gazeux du processus traité dans le catalyseur (5) à l'effluent gazeux du processus avant le catalyseur (5).

13. Installation de traitement de l'acier (1) selon l'une quelconque des revendications 8 à 12, dans laquelle on prévoit un échangeur de chaleur (7) qui utilise les gaz d'échappement du four à recuire (2) pour le réchauffage de l'air de combustion pour au moins un brûleur de réchauffage (20) du four à recuire (2).

14. Instillation de traitement de l'acier (1) selon l'une quelconque des revendications 8 à 13, dans laquelle on prévoit au moins un générateur de vapeur de récupération de chaleur (9) qui utilise les gaz d'échappement du four recuire (2) pour générer de la vapeur de processus.
